# EUROPÄISCHE PATENTSCHRIFT

(11) **EP 1 080 995 B1**
(45) Veröffentlichungstag und Bekanntmachung des Hinweises auf die Patenterteilung: **08.10.2003**
(21) Anmeldenummer: 00114346.0
(22) Anmeldetag: 05.07.2000
(51) Int. Cl.: B60R 21/16, B60R 21/04

(54) **Seitenaufpralldämpfeinrichtung für ein Fahrzeug**
Side impact damping device for a vehicle
Dispositif amortisseur pour chocs latéraux pour un véhicule

(30) Priorität: 24.08.1999 DE 19939990
(43) Veröffentlichungstag der Anmeldung: 07.03.2001
(73) Patentinhaber: DaimlerChrysler AG, 70567 Stuttgart (DE)
(72) Erfinder: Baumann, Karl-Heinz, 71149 Bondorf (DE); Bruhnke, Ulrich, 71139 Ehningen (DE); Mau, Hans-Jürgen, 71069 Sindelfingen (DE); Piesche, Michael, 71131 Jettingen (DE)

(56) Entgegenhaltungen:
- EP-A- 0 644 088
- EP-B- 0 673 808
- DE-A- 19 928 784
- DE-U- 9 207 774
- US-A- 5 382 051
- US-A- 5 447 326
- US-A- 5 899 489
- PATENT ABSTRACTS OF JAPAN vol. 018, no. 177 (M-1582), 25. März 1994 (1994-03-25) & JP 05 338513 A (TOYOTA MOTOR CORP), 21. Dezember 1993 (1993-12-21)
- PATENT ABSTRACTS OF JAPAN vol. 016, no. 099 (M-1220), 11. März 1992 (1992-03-11) & JP 03 276844 A (MAZDA MOTOR CORP), 9. Dezember 1991 (1991-12-09)

## Beschreibung

Die Erfindung betrifft eine Seitenaufpralldämpfeinrichtung für ein Fahrzeug, insbesondere zur Anordnung im Bereich der B-Säule des Fahrzeugs, mit einer den Fahrzeuginsassen zugewandten Verkleidung, mit einem zwischen der Verkleidung und der Fahrzeugkarosserie vorhandenen Airbag und mit einer den Airbag im Falle eines Seitenaufpralls auslösenden Sensoreinheit.

Derzeit bekannte Seitenaufpralldämpfeinrichtungen sind in den Türen, in den Sitzlehnen oder im Bereich der B-Säule des Fahrzeugs platziert. Seitenaufpralldämpfeinrichtungen in den Türen besitzen dabei den Nachteil, dass bei einem kleinen Bauraum zwischen der B-Säule und den Fahrzeuginsassen die Auslösezeit der Pralldämpfeinrichtung nicht ausreicht, um im Zwischenraum zwischen 3-Säule und Fahrzeuginsassen eine ausreichende Dämpfwirkung entfalten zu können. Außerdem ist die Unterbringung solcher Seitenaufpralldämpfeinrichtungen in den Fahrzeugtüren unter Umständen ungünstig, da in den Fahrzeugtüren aufgrund dort vorhandener Bauteile, wie beispielsweise Türschließmechanismen, Fensterhebvorrichtungen oder Lautsprechersystemen, relativ wenig Freiraum vorhanden ist. Weiterhin muss die Seitenaufpralldämpfeinrichtung relativ große Wege überbrücken, ehe die eigentliche Wirkzone erreicht wird.

Seitenaufpralldämpfeinrichtung in den Sitzen, insbesondere in den Sitzen vorhandene Airbags, sind zwar näher an den Fahrzeuginsassen platziert, wirken allerdings nur bedingt zwischen den Fahrzeuginsassen und dem die Fahrzeuginsassen umgebenden Fahrgastraum.

Seitenaufpralldämpfeinrichtungen, die als Airbag an den B-Säulen von Fahrzeugen vorhanden sind, sind beispielsweise aus der DE 91 11 206 U1 bekannt. Nachteilhafterweise ist allerdings zwischen den Fahrzeuginsassen und der B-Säule relativ wenig Zwischenraum zur Entfaltung eines an der B-Säule angeordneten Airbags vorhanden, so dass im Falle eines Seitenaufpralls des Fahrzeuges nur relativ wenig Aufprallenergie über eine solche Seitenaufpralldämpfeinrichtung gedämpft werden kann.

Des weiteren ist aus der US 5 447 326 A eine Seitenaufpralldämpfeinrichtung für ein Fahrzeug, mit einer den Fahrzeuginsassen zugewandten Verkleidung, mit einem zwischen der Verkleidung und der Fahrzeugkarosserie vorhandenen Airbag und mit einer den Airbag im Falle eines Seitenaufpralls auslösenden Sensoreinheit bekannt, bei dem die Verkleidung durch Auslösen des Airbags in Richtung Fahrzeugmitte bewegt wird. Entsprechende Systeme offenbaren die US 5 382 051, JP 05 338 513 A sowie die EP 644 088 A2.

Der vorliegenden Erfindung liegt die Aufgabe zugrunde, eine Seitenaufpralldämpfeinrichtung zu schaffen, durch die die Fahrzeuginsassen optimal geschützt sind und ein Seitenaufprall eines Fahrzeuges optimal abgedämpft wird.

Zur Lösung der Aufgabe wird eine Seitenaufpralldämpfeinrichtung der eingangs beschriebenen Art vorgeschlagen, die vorsieht, dass die Verkleidung Polsterungen vorsieht, die Becken, Torso, Schulter und KopF der Fahrzeuginsassen abpolstern.

Durch die Erfindung wird vorteilhafterweise erreicht, dass die Fahrzeuginsassen durch den auslösenden Airbag mit einer Kraft beaufschlagt werden, der der auf das Fahrzeug wirkenden Aufprallkraft gleichgerichtet ist. Damit wird bei einem Seitenaufprall des Fahrzeugs einer impulsartigen Beschleunigung der Fahrzeuginsassen aufgrund ihrer Massenträgheit entgegengewirkt. Außerdem werden die Fahrzeuginsassen von der Aufprallzone des auf das Fahrzeug auftreffenden Fremdkörpers weggeführt, wodurch zusätzliche Eindringwege für den in das Fahrzeug eindringenden Fremdkörper geschaffen werden. Zudem wird die Beaufschlagung der Fahrzeuginsassen mit dem Airbag durch eine Polsterungen der Verkleidung besser gedämpft, was zu einem sanfteren Aufschlagen der Verkleidung führt.

Die Erfindung weist außerdem den Vorteil auf, dass unter Beanspruchung von relativ wenig Bauraum ein effektives Aufprallverhalten und eine damit zusammenhängende effektive Seitenaufpralldämpfung des Fahrzeugs gewährleistet ist.

Nach einer Ausgestaltung der Erfindung ist bei ausgelöstem Airbag die Verkleidung zwischen den Fahrzeuginsassen und dem Airbag vorhanden. Dadurch wird vorteilhafterweise erreicht, dass die Verkleidung bei Auslösen des Airbags nicht weggeführt werden muss.

Eine andere Ausgestaltung der Erfindung sieht vor, dass die Verkleidung und der Airbag einstückig ausgestaltet ist. Eine solche Ausgestaltung ist insbesondere kostengünstig zu realisieren und gewährleistet eine sichere Verbindung zwischen der Verkleidung und dem ausgelösten Airbag.

Nach einer anderen Weiterbildung der Erfindung ist die Verkleidung als insbesondere sich an den menschlichen Körper anpassendes Verteilelement ausgestaltet, dass die bei ausgelöstem Airbag auf die Fahrzeuginsassen wirkende Kraft günstig verteilt. Auf diese Art und Weise wird die Beaufschlagung der Verkleidung auf den menschlichen Körper gleichmäßig und damit vertretbar bewirkt.

Nach einer Weiterbildung der Erfindung wird die Verkleidung bei ausgelöstem Airbag mit Halteelementen in einer definierten Endposition gehalten. Die Halteelemente verhindern dabei ein unkontrolliertes Verhalten der Verkleidung, insbesondere wird ein zu weites Eindringen der Verkleidung bzw. des Airbags in den Fahrgastraum verhindert.

Eine Ausgestaltung der Erfindung sieht vor, dass die Halteelemente insbesondere Haltebänder sind, die mit ihrem einen Ende an der Fahrzeugkarosserie und mit ihrem anderen Ende an der Verkleidung befestigt sind. Durch eine definierte Länge der Haltebänder wird ein kontrollierter Bewegungsablauf der Verkleidung in den Fahrgastraum gewährleistet. Außerdem ist denkbar, dass die Haltebänder elastisch bzw. teilelastisch ausgestaltet sind, um die auf die Fahrzeuginsassen wirkende Beaufschlagung durch den Airbag besser und gleichmäßiger abzudämpfen. Bei mehreren erfindungsgemäßen Seitenaufpralldämpfeinrichtungen in einem Fahrzeug können beispielsweise die einzelnen Seitenaufpralldämpfeinrichtungen verschieden lange Haltebänder aufweisen, je nachdem welcher Abstand zwischen dem Fahrzeug und den Fahrzeuginsassen zu überwinden ist.

Eine Variante der Erfindung sieht vor, dass sich der Airbag schlauchartig über weitgehend die gesamte Höhe des Fahrgastraums erstreckt und im Bereich des Fahrzeugdaches und des Fahrzeugbodens an der Fahrzeugkarosserie befestigt ist. Eine solche Ausgestaltung hat den Vorteil, dass die gesamte Höhe des Fahrgastraums von dem Airbag abgedeckt wird, was insbesondere eine gleichmäßige Beaufschlagung und Beschleunigung der entsprechenden Fahrzeuginsassen zur Folge hat.

Eine andere Weiterbildung der Erfindung sieht vor, dass der Airbag in ausgelöstem Zustand Teilabschnitte aufweist, die sich, insbesondere in und entgegen Fahrtrichtung, in den Fahrgastraum erstrecken und zur Abpolsterung der Fahrzeuginsassen, insbesondere deren Rippen- und/oder Kopfpartie, vorgesehen sind. Durch Vorhandensein solcher Teilabschnitte kann der Airbag zusätzliche Bereiche innerhalb des Fahrgastraums abdecken, was einen zusätzlichen Schutz für die Fahrzeuginsassen darstellt.

Nach einer Weiterbildung der Erfindung weist die Verkleidung insbesondere in und entgegen der Fahrtrichtung aufklappbare Klappenelemente auf, durch welche die Teilabschnitte des ausgelösten Airbags in den Fahrgastraum dringen. Durch Vorhandensein solcher Klappenelemente in der Verkleidung wird gewährleistet, dass die entsprechenden Teilabschnitte des ausgelösten Airbags trotz Vorhandensein der Verkleidung an den gewünschten Wirkzonen wirken können. Solche Klappelemente haben den Vorteil, dass sie sehr früh aufklappen können und sich der darunter liegende Airbagbereich bzw. die Airbagteilabschnitte vollständig entfalten können.

Eine Variante der Erfindung sieht vor, dass die Seitenaufpralldämpfeinrichtungen in der B-Säule und/oder einer Fahrzeugtüre vorhanden ist. Gerade die Kombination mehrerer erfindungsgemäßen Seitenaufpralldämpfeinrichtungen, insbesondere in der B-Säule und in den Fahrzeugtüren, bietet einen optimalen Schutz der Fahrzeuginsassen im Falle eines Seitenaufpralls.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine schematische Darstellung einer Fahrgastraumseitenwand,
- Figur 2: die Darstellung nach Figur 1 mit ausgelöstem Airbag und
- Figur 3: die Fahrgastraumseitenwand mit einem Fahrzeuginsassen im Querschnitt wahrend eines Seitenaufpralls.

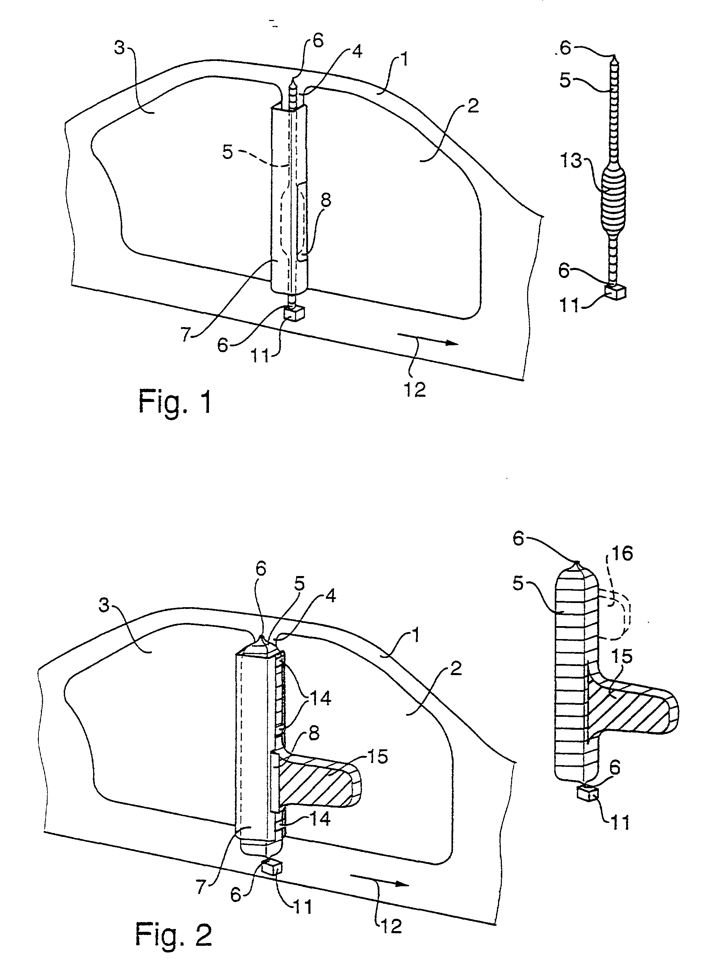

Die Figur 1 zeigt die Innenseite einer Fahrgastraumseitenwand 1 mit einem Fahrertürausschnitt 2 und einem Fondtürausschnitt 3. Zwischen dem Fondtürausschnitt 3 und dem Fahrertürausschnitt 2 ist eine B-Saule 4 vorhanden. An der B-Säule 4 ist ein schlauchartiger Airbag 5 über zwei Befestigungspunkte 6 angeordnet. Der schlauchartige Airbag 5 wird dabei von einer Verkleidung 7 in Richtung des Fahrgastraums verkleidet. Die Verkleidung 7 weist dabei an ihrer den Fahrertürausschnitt 2 zugewandten Seite ein aufklappbares Klappelement 8 auf. In der Figur 1 ist außerdem ein Gasgenerator 11 mit dem schlauchartigen Airbag 5 verbunden, welcher im Falle eines Seitenaufpralls den Airbag 5 explosionsartig mit Gas füllt. Die Fahrtrichtung des Fahrzeugs wird durch einen Pfeil 12 angedeutet.

Im rechten Bereich der Figur 1 ist der schlauchartige Airbag 5 mit dem zugehörigen Gasgenerator 11 als Einzelelement dargestellt, wodurch eine im Mittelbereich des Airbags 5 vorhandene Aufweitung 13 deutlich erkennbar wird.

In der Figur 2 ist der Airbag 5 in ausgelöstem Zustand gezeigt. Die Verkleidung 7 ist dabei mit Halteelementen, nämlich mit Haltebändern 14, in einer definierten Endposition gehalten. Die Haltebänder 14 sind mit ihrem einen Ende an der Fahrzeugkarosserie, insbesondere an der B-Säule 4, und mit ihrem anderen Ende an der Verkleidung 7 befestigt.

In der Figur 2 ist deutlich zu erkennen, dass der Airbag 5 in ausgelöstem Zustand einen Teilabschnitt 15 aufweist, der sich in Fahrtrichtung 12 in den Fahrgastraum erstreckt. Der Teilabschnitt 15 dient dabei insbesondere zur Abpolsterung der Fahrzeuginsassen an deren Rippenpartie. In Figur 2 ist außerdem gut erkennbar, dass das Klappelement 8 aufgrund der Entfaltung des Teilabschnitts 15 des Airbags 5 aufgeklappt, also geöffnet, ist.

Dabei ist auch denkbar, dass sich das Klappelement 8 über die gesamte Länge der Verkleidung 7 erstreckt, wodurch ein größerer Bereich des Fahrgastinnenraums durch den Teilabschnitt 15 abgedeckt werden kann.

Im rechten Bereich der Figur 2, in welchem der ausgelöste Airbag 5 zur Verdeutlichung als Einzelelement dargestellt ist, wird angedeutet, dass ein weiterer Teilabschnitt 16 zum Schutz des Kopfbereichs der Fahrzeuginsassen vorgesehen sein kann.

Dabei ist selbstverständlich auch denkbar, dass die Teilabschnitte 15 oder 16 auch entgegen der Fahrtrichtung 12 zum Schutz der im Fahrzeugfond vorhandenen Fahrzeuginsassen vorhanden sein können.

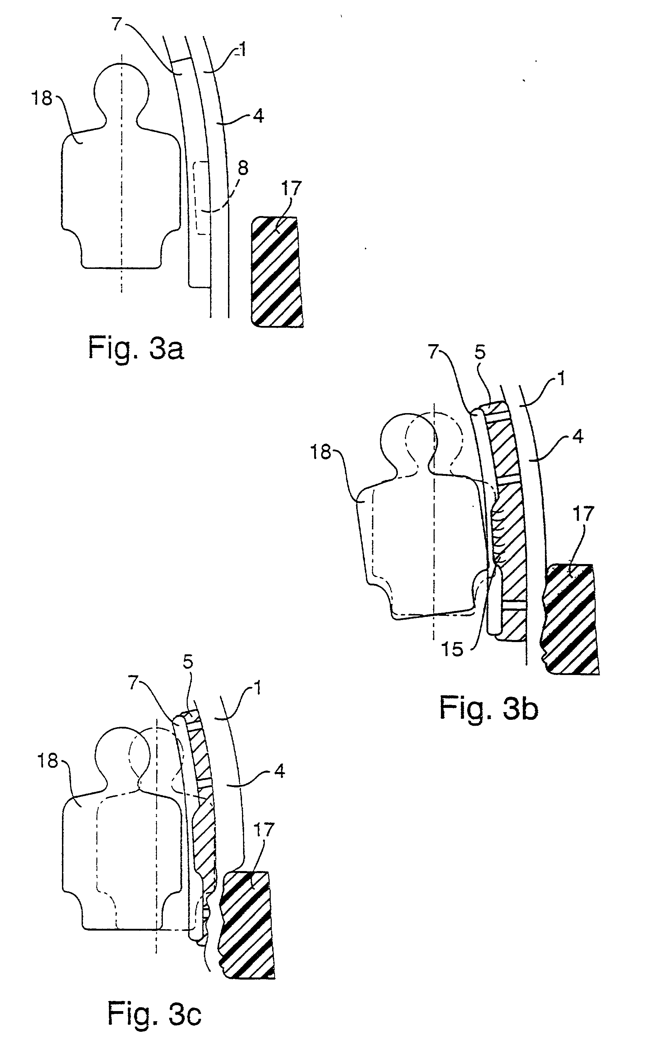

In der Figur 3, in der ein Fremdkörper 17 auf die Fahrgastraumseitenwand 1 trifft, sind drei Einzelzustände (a) , (b) und (c) des Aufpralls dargestellt. In der Darstellung (a) hat der Fremdkörper 17 noch keinen Kontakt mit dem Fahrzeug bzw. mit der Fahrgastraumseitenwand 1. Deutlich zu erkennen ist ein Fahrzeuginsasse 18, zwischen dem und der B-Säule 4 bzw. der Verkleidung 7 ein Freiraum vorhanden ist. In der Darstellung (a) ist auch das Klappelement 8 angedeutet.

Die Darstellung (b) zeigt nun die Kollision des Fremdkörpers 17 mit der Fahrgastraumseitenwand 1. Deutlich zu erkennen ist, wie der Airbag 5 - der in Darstellung (a) nicht sichtbar hinter der Verkleidung 7 vorhanden ist - in Darstellung (b) die Verkleidung 7 explosionsartig in Richtung Fahrzeugmitte verschiebt. Der Airbag 5 wird hierbei von einer nicht dargestellten Sensoreinheit ausgelöst, welche insbesondere ein Beschleunigungssensor und/oder ein Aufprallzünder sein kann. Durch den ausgelösten Airbag 5 wird der Fahrzeuginsasse 18 mit einer vertretbaren Kraft beaufschlagt, wodurch er in Richtung Fahrzeugmitte beschleunigt wird. Der Fahrzeuginsasse 18 ist zur Verdeutlichung seines durch den Airbag 5 bewirkten Positionswechsels in seiner Ausgangsposition als gestrichelte und in seiner nach Darstellung (b) erreichten Endposition als durchgezogene Linie gezeichnet. Vorteilhafterweise ist die Verkleidung 7 dabei als Verteilelement ausgestaltet, das die bei ausgelöstem Airbag 5 auf den Fahrzeuginsassen 18 wirkende Kraft günstig verteilt. Die Verkleidung 7 sieht Polsterungen 15, 16 vor, die Becken, Torso, Schulter und Kopf des Fahrzeuginsassen 18 abpolstern. In der Darstellung (b) ist auch der Teilabschnitt 15 angedeutet, der insbesondere den Rippenbereich des Fahrzeuginsassen 18 schützt.

In der Darstellung (c) der Figur 3 ist der Fremdkörper 17 weiter in die Fahrgastraumseitenwand 1 eingedrungen. Deutlich erkennbar ist, dass der Fahrzeuginsasse 18 aufgrund der Beschleunigung durch den ausgelösten Airbag 5 in einer der Fahrzeugmitte näheren Position befindet, was durch die durchgezogene Linie des Fahrzeuginsassens 18 im Vergleich zu seiner Ausgangsposition, welche durch die gestrichelte Linie angedeutet wird, verdeutlicht wird.

Aus Figur 3 wird deutlich, dass der Fahrzeuginsasse 18 aufgrund des sich auslösenden Airbags 5 in die gleiche Richtung beschleunigt wird, wie die durch den Fremdkörper 17 auf das Fahrzeug wirkende Kraft gerichtet ist. Außerdem wird der Fahrzeuginsasse 18 von der Aufprallzone des Fremdkörpers 17 weggeführt, wodurch ein zusätzliche möglicher Eindringweg für den in das Fahrzeug eindringenden Fremdkörper 17 gebildet ist. Dadurch wird eine optimale Sicherheit des Fahrzeuginsassens 18 gewährleistet.

## Patentansprüche

1. Seitenaufpralldämpfeinrichtung für ein Fahrzeug, insbesondere zur Anordnung im Bereich der B-Säule (4) des Fahrzeugs, mit einer den Fahrzeuginsassen (18) zugewandten Verkleidung (7), mit einem zwischen der Verkleidung (7) und der Fahrzeugkarosserie vorhandenen Airbag (5) und mit einer den Airbag (5) im Falle eines Seitenaufpralls auslösenden Sensoreneinheit, wobei die Verkleidung durch Auslösen des Airbags in Richtung Fahrzeugmitte bewegt wird,
**dadurch gekennzeichnet,**
**dass** die Verkleidung (7) Polsterungen zum Abpolstern von Becken, Torso, Schulter und Kopf der Fahrzeuginsassen (18) aufweist.

2. Seitenaufpralldämpfeinrichtung nach Anspruch 1,
**dadurch gekennzeichnet,**
**dass** bei ausgelöstem Airbag (5) die Verkleidung (7) zwischen den Fahrzeuginsassen (18) und dem Airbag (5) vorhanden ist.

3. Seitenaufpralldämpfeinrichtung nach Anspruch 2,
**dadurch gekennzeichnet,**
**dass** die Verkleidung (7) und der Airbag (5) einstückig ausgestaltet ist.

4. Seitenaufpralldämpfeinrichtung nach Anspruch 1,
**dadurch gekennzeichnet,**
**dass** die Verkleidung (7) als insbesondere sich an den Fahrzeuginsassen (18) anpassendes Verteilelement ausgestaltet ist.

5. Seitenaufpralldämpfeinrichtung nach Anspruch 1,
**dadurch gekennzeichnet,**
**dass** die Verkleidung (7) bei ausgelöstem Airbag (5) mit Halteelementen in einer definierten Endposition gehalten wird.

6. Seitenaufpralldämpfeinrichtung nach Anspruch 5,
**dadurch gekennzeichnet,**
**dass** die Halteelemente insbesondere Haltebänder (14) sind, die mit ihrem einen Ende an der Fahrzeugkarosserie und mit ihrem anderen Ende an der Verkleidung (7) befestigt sind.

7. Seitenaufpralldämpfeinrichtung nach Anspruch 1,
**dadurch gekennzeichnet,**
**dass** sich der Airbag (5) schlauchartig über weitgehend die gesamte Höhe des Fahrgastraums erstreckt und im Bereich des Fahrzeugdaches und des Fahrzeugbodens an der Fahrzeugkarosserie befestigt ist.

8. Seitenaufpralldämpfeinrichtung nach Anspruch 1,
**dadurch gekennzeichnet,**
**dass** der Airbag (5) in ausgelöstem Zustand Teilabschnitte (15, 16) aufweist, die sich ,insbesondere in- und entgegen der Fahrtrichtung (12), in den Fahrgastraum erstrecken und zur Abpolsterung der Fahrzeuginsassen (18), insbesondere deren Rippen- und/oder Kopfpartie, vorgesehen sind.

9. Seitenaufpralldämpfeinrichtung nach Anspruch 8,
**dadurch gekennzeichnet,**
**dass** die Verkleidung (7) insbesondere in und entgegen der Fahrtrichtung (12) aufklappbare Klappenelemente (8) aufweist, durch welche die Teilabschnitte (15, 16) des ausgelösten Airbags (5) in den Fahrgastraum dringen.

10. Seitenaufpralldämpfeinrichtung nach Anspruch 1,
**dadurch gekennzeichnet,**
**dass** die Seitenaufpralldämpfeinrichtung in der B-Säule (4) und/oder einer Fahrzeugtüre vorhanden ist.

## Claims

1. Side-impact damping device for a vehicle, in particular for arrangement in the region of the B-pillar (4) of the vehicle, having a trim panel (7) which faces the vehicle occupants (18), having an airbag (5) between the trim panel (7) and the vehicle body, and having a sensor unit which triggers the airbag (5) in the event of a side impact, triggering of the airbag causing the trim panel to be moved in the direction of the centre of the vehicle, **characterized in that** the trim panel (7) has padding for cushioning the pelvis, torso, shoulder and head of the vehicle occupants (18).

2. Side-impact damping device according to Claim 1, **characterized in that** with the airbag triggered (5), the trim panel (7) is present between the vehicle occupants (18) and the airbag (5).

3. Side-impact damping device according to Claim 2, **characterized in that** the trim panel (7) and the airbag (5) are designed as a single component.

4. Side-impact damping device according to Claim 1, **characterized in that** the trim panel (7) is designed as a distributing element which, in particular, adapts itself to the vehicle occupants (18).

5. Side-impact damping device according to Claim 1, **characterized in that** with the airbag (5) triggered, the trim panel (7) is retained in a defined end position by means of retaining elements.

6. Side-impact damping device according to Claim 5, **characterized in that** the retaining elements are, in particular, retaining straps (14) which are fastened by their one end to the vehicle body and by their other end to the trim panel (7).

7. Side-impact damping device according to Claim 1, **characterized in that** the airbag (5) extends in a tubular manner over largely the entire height of the passenger compartment and is fastened to the vehicle body in the region of the vehicle roof and vehicle floor.

8. Side-impact damping device according to Claim 1, **characterized in that** the airbag (5) in the triggered state has subsections (15, 16) which extend into the passenger compartment, in particular into and counter to the direction of travel (12), and are provided for cushioning the vehicle occupants (18), in particular the rib and/or head part of them.

9. Side-impact damping device according to Claim 8, **characterized in that** the trim panel (7) has flap elements (8) which can be swung open in particular in and counter to the direction of travel (12) and through which the subsections (15, 16) of the triggered airbag (5) penetrate into the passenger compartment.

10. Side-impact damping device according to Claim 1, **characterized in that** the side-impact damping device is present in the B-pillar (4) and/or in a vehicle door.

## Revendications

1. Système d'amortissement de choc latéral pour un véhicule, en particulier pour une disposition dans la zone de la colonne B (4) du véhicule, avec un habillage (7) tourné vers les passagers du véhicule (18), avec un airbag (5) présent entre l'habillage (7) et la carrosserie du véhicule et avec une unité de capteur déclenchant l'airbag (5) dans le cas d'un choc latéral, l'habillage étant déplacé en direction du centre du véhicule par le déclenchement de l'airbag, **caractérisé en ce que** l'habillage (7) présente des rembourrages pour l'amortissement du choc avec le bassin, le torse, l'épaule et la tête des passagers du véhicule (18).

2. Dispositif d'amortissement de choc latéral selon la revendication 1, **caractérisé en ce que** l'habillage (7) est présent entre le passager du véhicule (18) et l'airbag (5) lorsque l'airbag (5) est déclenché.

3. Dispositif d'amortissement de choc latéral selon la revendication 2, **caractérisé en ce que** l'habillage (7) et l'airbag (5) sont conçus d'une seule pièce.

4. Système d'amortissement de choc latéral selon la revendication 1, **caractérisé en ce que** l'habillage (7) est conçu comme un élément de répartition qui s'adapte en particulier aux passagers du véhicule (18).

5. Dispositif amortisseur de choc latéral selon la revendication 1, **caractérisé en ce que** l'habillage (7) est maintenu dans une position finale définie avec des éléments de retenue lorsque l'airbag (5) s'est déclenché.

6. Dispositif amortisseur de choc latéral selon la revendication 5, **caractérisé en ce que** les éléments de retenue sont en particulier des bandes de retenue (14), qui sont fixées par l'une de leurs extrémités à la carrosserie du véhicule et par l'autre extrémité à l'habillage (7).

7. Dispositif amortisseur de choc latéral selon la revendication 1, **caractérisé en ce que** l'airbag (5) s'étend à la façon d'un tuyau flexible sur largement toute la hauteur de l'habitacle et est fixé à la carrosserie du véhicule dans la zone du toit et du plancher du véhicule.

8. Système amortisseur de choc latéral selon la revendication 1, **caractérisé en ce que** l'airbag (5) présente des tronçons partiels (15, 16) lorsqu'il est déclenché, qui s'étendent dans l'habitacle, et en particulier dans le sens de marche et dans le sens contraire au sens de marche (12) et sont prévus pour l'amortissement du choc pour les passagers du véhicule (18), en particulier pour la partie des côtes et/ou la partie de la tête.

9. Dispositif amortisseur de choc latéral selon la revendication 8, **caractérisé en ce que** l'habillage (7) présente des éléments de clapets (8) relevables dans le sens de marche et dans le sens contraire au sens de marche (12), par lesquels les tronçons partiels (15, 16) de l'airbag (5) déclenché pénètrent dans l'habitacle.

10. Dispositif d'amortisseur de choc latéral selon la revendication 1, **caractérisé en ce que** le dispositif amortisseur de choc latéral est présent dans la colonne B (4) et/ou une porte de véhicule.
